# EUROPÄISCHE PATENTANMELDUNG

(11) **EP 4 644 052 A1**
(43) Veröffentlichungstag der Anmeldung: **05.11.2025**
(21) Anmeldenummer: 25169659.7
(22) Anmeldetag: 10.04.2025
(51) Int. Cl.: B25J 9/00, B25J 9/08, B25J 18/00, F16D 1/033

(54) **FLANSCHVERBINDUNG SOWIE ROBOTERARM**

(30) Priorität: 03.05.2024 DE 102024112446
(71) Anmelder: Neura Robotics GmbH, 72555 Metzingen (DE)
(72) Erfinder: HENSKES, Michael, 41238 Mönchengladbach (DE); GÖZ, Jannik, 72458 Albstadt (DE); MALZAHN, Jörn, 72555 Metzingen (DE)
(74) Vertreter: Westphal, Mussgnug & Partner Patentanwälte mbB

(57) **Zusammenfassung**

Flanschverbindung (10) zur Verbindung eines ersten Roboterarmteils (12) mit einem zweiten Roboterarmteil (14),
mit einer Flanschlängsachse (16), einem ersten Flanschelement (18), einem zweiten Flanschelement (20) und mindestens einem Klemmkörper (22),
wobei das erste Flanschelement (18) umfasst
**•** eine Flanschschulter (24), und
**•** einen ersten Flanschvorsprung (26) mit mindestens einem ersten Spannfortsatz (28),
wobei das zweite Flanschelement (20) umfasst
**•** mindestens einen zweiten Flanschvorsprung (30) mit einem zweiten Spannfortsatz (32),

und wobei das erste Flanschelement (18) und das zweite Flanschelement (20) derart zueinander angeordnet sind, dass durch Einschieben des mindestens einen Klemmkörpers (22) zwischen dem mindestens einen ersten Spannfortsatz (28) und dem zweiten Spannfortsatz (32) eine reib- und/oder formschlüssige Verbindung des zweiten Spannfortsatzes (32) mit der Flanschschulter (24) herstellbar ist.

## Beschreibung

Die Erfindung betrifft eine Flanschverbindung zur Verbindung eines ersten Roboterarmteils mit einem zweiten Roboterarmteil sowie einen Roboterarm mit einer solchen Flanschverbindung.

Vor allem solche Roboter, die für Handhabungsaufgaben im weitesten Sinne vorgesehen sind, verfügen zur Ausübung der vorgesehenen Aufgabe in aller Regel über mindestens einen Roboterarm. Ein derartiger Roboterarm umfasst meist mehrere Roboterarmteile, die bei der Montage des Roboters mittels Flanschverbindungen miteinander verbunden werden. Diese Flanschverbindungen übertragen die im Roboterarm wirkenden statischen und dynamischen Kräfte und Momente zwischen den Roboterarmteilen. Bei bestehenden Roboterarmen werden dafür mitunter Schraubflansche verwendet, mittels derer die Roboterarmteile mit mehreren parallel zur Roboterarmlängsachse angeordneten Schraubverbindungen miteinander verbunden werden.

Um die auf den Roboterarm wirkenden Momente so klein wie möglich zu halten, besteht das Bestreben, die Flanschverbindungen bezogen auf eine Roboterarmlängsachse möglichst kurz auszubilden. Axial angrenzend an die Flanschverbindungen steht daher bei den bekannten Systemen ein nur sehr begrenzter Bauraum zur Verfügung, was zu einer schlechten Montierbarkeit und Einstellbarkeit der Schraubverbindungen führt.

Der Erfindung liegt die Aufgabe zugrunde, eine axial kurz bauende Flanschverbindung für einen Roboterarm bereitzustellen, die einfach montier- und einstellbar ist. Der Erfindung liegt ferner die Aufgabe zugrunde, einen Roboterarm bereitzustellen, dessen Roboterarmteile einfach und sicher aneinander anordenbar sind.

Die Aufgaben werden erfindungsgemäß gelöst durch eine Flanschverbindung mit den Merkmalen des Patentanspruchs 1 sowie einen Roboterarm mit den Merkmalen des Patentanspruchs 14.

Vorteilhafte Ausgestaltungen und Weiterbildungen der Erfindung sind in den abhängigen Ansprüchen angegeben.

Eine erfindungsgemäße Flanschverbindung zur Verbindung eines ersten Roboterarmteils mit einem zweiten Roboterarmteil umfasst eine Flanschlängsachse, ein erstes Flanschelement, ein zweites Flanschelement und mindestens einen Klemmkörper. Das erste Flanschelement umfasst eine Flanschschulter und einen in einer Richtung der Flanschlängsachse hervorragenden ersten Flanschvorsprung mit mindestens einem ersten Spannfortsatz. Die Flanschlängsachse ist vorzugsweise parallel zur einer oder zusammenfallend mit einer Roboterarmlängsachse des ersten Roboterarmteils und/oder des zweiten Roboterarmteils ausgebildet. Das erste Flanschelement kann einstückig ausgebildet sein. Das zweite Flanschelement umfasst mindestens einen in einer Richtung der Flanschlängsachse hervorragenden zweiten Flanschvorsprung mit einem zweiten Spannfortsatz. Vorzugsweise ragt der zweite Flanschvorsprung in dem ersten Flanschvorsprung entgegengesetzter Richtung von dem zweiten Flanschelement hervor.

Erfindungsgemäß sind das erste Flanschelement und das zweite Flanschelement derart zueinander angeordnet, dass bezogen auf die Flanschlängsachse der zweite Spannfortsatz zwischen der Flanschschulter und dem mindestens einen ersten Spannfortsatz angeordnet ist, und dass durch Einschieben des mindestens einen Klemmkörpers zwischen dem mindestens einen ersten Spannfortsatz und dem zweiten Spannfortsatz eine reib- und/oder formschlüssige Verbindung des zweiten Spannfortsatzes mit der Flanschschulter herstellbar ist. Bezogen auf die Flanschlängsachse ist der mindestens eine Klemmkörper damit vorzugsweise zwischen dem mindestens einen ersten Spannfortsatz und dem zweiten Spannfortsatz angeordnet. Bezogen auf die Flanschlängsachse kann die Flanschverbindung dadurch mit einem geringen Bauraumbedarf ausgeführt werden. Durch das Vorsehen des mindestens einen einschiebbaren Klemmkörpers kann zudem die Montagetätigkeit beim Verbinden des ersten Flanschelements mit dem zweiten Flanschelement von der durch die Flanschlängsachse vorgegebene Richtung entkoppelt werden. Darüber hinaus bietet das Vorsehen des mindestens einen Klemmkörpers eine einfache Einstellungsmöglichkeit der Flanschverbindung, insbesondere anhand einer Klemmkraft. Vorzugsweise ist der mindestens eine Klemmkörper senkrecht zu der Flanschlängsachse einschiebbar angeordnet.

Vorzugsweise ist der mindestens eine Klemmkörper keilförmig ausgebildet. Dadurch kann die Flanschverbindung durch Wählen einer Einschubtiefe des mindestens einen Klemmkörpers zwischen dem mindestens einen ersten Spannfortsatz und dem zweiten Spannfortsatz bestimmt werden. Durch die keilförmige Ausbildung weist der mindestens eine Klemmkörper vorzugsweise einen trapezförmigen Querschnitt auf.

Vorzugsweise weist der mindestens eine erste Spannfortsatz eine erste Spannfläche zum Zusammenwirken mit dem mindestens einen Klemmkörper und der zweite Spannfortsatz eine zweite Spannfläche zum Zusammenwirken mit dem mindestens einen Klemmkörper auf, wobei die erste Spannfläche und/oder die zweite Spannfläche mit einer in einer Einschieberichtung des mindestens einen Klemmkörpers angeordneten Einschiebeachse einen Klemmwinkel zwischen 0° und 90°, besonders bevorzugt zwischen 10° und 30°, einschließen. Insbesondere wenn der mindestens eine Klemmkörper keilförmig ausgebildet ist, sind an der ersten Spannfläche bzw. der zweiten Spannfläche anliegende Klemmflächen des Klemmkörpers vorzugsweise parallel zu der jeweils entsprechenden Spannfläche ausgebildet.

Der mindestens eine erste Spannfortsatz kann als Federzunge ausgebildet sein. Dadurch kann die Einstellbarkeit der Flanschverbindung verbessert werden.

Vorzugsweise weist der zweite Spannfortsatz eine parallel zu der Flanschschulter angeordnete Schulterkontaktfläche zum Herstellen der reib- und/oder formschlüssigen Verbindung mit der Flanschschulter aufweist. Die Schulterkontaktfläche ist bevorzugt von der zweiten Spannfläche verschieden. Besonders bevorzugt ist die Schulterkontaktfläche der zweiten Spannfläche gegenüberliegend angeordnet. Die Schulterkontaktfläche ist vorzugsweise senkrecht zu der Flanschlängsachse angeordnet. Sofern die zweite Spannfläche den zuvor beschriebenen Klemmwinkel aufweist, kann der zweite Spannfortsatz damit einen trapezförmigen Querschnitt aufweisen.

In einer Weiterbildung der Erfindung weist die Flanschverbindung eine Reibplatte auf, die zwischen der Flanschschulter und dem zweiten Spannfortsatz angeordnet ist. Die Reibplatte wird vorzugsweise zur Verbesserung des Reibschlusses eingesetzt, wenn die Verbindung des zweiten Spannfortsatzes mit der Flanschschulter rein reibschlüssig ausgebildet ist. Besonders bevorzugt ist die reibplatte zwischen der Flanschschulter und der Schulterkontaktfläche angeordnet.

In einer bevorzugten Ausführungsform der Erfindung umfasst die Flanschverbindung mindestens eine Klemmschraube, mittels der der mindestens eine Klemmkörper zwischen dem mindestens einen ersten Spannfortsatz und dem zweiten Spannfortsatz einschiebbar ist. Dadurch kann die die Klemmkraft mittels des Anzugsmoments der mindestens einen Klemmschraube eingestellt werden. Vorzugsweise kann der mindestens eine Klemmkörper durch Einschrauben der mindestens einen Klemmschraube eingeschoben werden. Die mindestens eine Klemmschraube kann in mindestens einer Durchgangsbohrung des mindestens einen Klemmkörpers angeordnet sein.

Der erste Flanschvorsprung oder der zweite Flanschvorsprung kann mindestens eine Gewindebohrung aufweisen, in die die mindestens eine Klemmschraube einschraubbar ist. Vorzugsweise ist die mindestens eine Gewindebohrung in dem ersten Flanschvorsprung angeordnet. Der erste Flanschvorsprung kann mindestens einen, vorzugsweise entgegen einer Einschieberichtung, hervorstehenden Gewindesockel aufweisen, der besonders bevorzugt in Richtung der Flanschlängsachse an den mindestens einen ersten Spannfortsatz angrenzt.

In einer bevorzugten Ausführungsform der Erfindung weist der mindestens eine Klemmkörper zwei einander gegenüberliegende Endabschnitte und einen zwischen den Endabschnitten angeordneten Mittelabschnitt auf, wobei der mindestens eine Klemmkörper derart angeordnet ist, dass entweder an jedem der beiden Endabschnitte jeweils einer des mindestens einen ersten Spannfortsatzes und an dem Mittelabschnitt einer des mindestens einen zweiten Flanschvorsprungs angeordnet ist, oder an jedem der beiden Endabschnitte jeweils einer des mindestens einen zweiten Flanschvorsprungs und an dem Mittelabschnitt einer des mindestens einen ersten Spannfortsatzes angeordnet ist. So kann eine sichere Kraftübertragung zwischen dem ersten Flanschelement und dem zweiten Flanschelement erreicht werden.

Vorzugsweise ist der mindestens eine zweite Flanschvorsprung jeweils mit dem zweiten Spannfortsatz an dem mindestens einen Klemmkörper angeordnet.

Vorzugsweise sind der mindestens eine erste Spannfortsatz und der mindestens eine zweite Flanschvorsprung in einer Umfangsrichtung um die Flanschlängsachse abwechselnd angeordnet sind. Dadurch kann jeder des mindestens einen zweiten Flanschvorsprungs in der Umfangsrichtung an den mindestens einen ersten Spannfortsatz und, sofern vorhanden, an den mindestens einen Gewindesockel, angrenzen.

Bevorzugt entspricht die Anzahl des mindestens einen Klemmkörpers der Anzahl des mindestens einen ersten Spannfortsatzes und/oder der Anzahl des mindestens einen zweiten Flanschvorsprungs. Dadurch können die Einstellbarkeit der Flanschverbindung weiter verbessert und Toleranzen besser ausgeglichen werden.

In einer Weiterbildung der Erfindung weist das erste Flanschelement eine Vielzahl von ersten Spannfortsätzen und das zweite Flanschelement weist eine Vielzahl von zweiten Flanschvorsprüngen auf. Dadurch kann eine gleichmäßige Kraftübertragung zwischen dem ersten Flanschelement und dem zweiten Flanschelement erreicht werden. Vorzugsweise sind zwölf erste Spannfortsätze und zwölf zweite Flanschvorsprünge vorhanden. Vorzugsweise weist jeder der ersten Spannfortsätze die Merkmale des zuvor beschriebenen mindestens einen ersten Spannfortsatzes und jeder der zweiten Flanschvorsprünge die Merkmale des zuvor beschriebenen mindestens einen zweiten Flanschvorsprungs auf.

Besonders bevorzugt sind die ersten Spannfortsätze und die zweiten Flanschvorsprünge gleichmäßig verteilt um die Flanschlängsachse angeordnet. Das erste Flanschelement und das zweite Flanschelement können damit kronenförmig ausgebildet sein.

Ein erfindungsgemäßer Roboterarm umfasst einen ersten Roboterarmteil, einen zweiten Roboterarmteil und eine vorstehend beschriebene Flanschverbindung, wobei das erste Flanschelement fest an dem ersten Roboterarmteil und das zweite Flanschelement fest, also vorzugsweise rotatorisch und translatorisch unverschieblich, an dem zweiten Roboterarmteil angeordnet ist. Bei der Montage des Roboterarms können das erste Flanschelement an dem ersten Roboterarmteil und das zweite Flanschelement an dem zweiten Roboterarmteil angeordnet werden, bevor die Verbindung der beiden Roboterarmteile durch Zusammenfügen des ersten Flanschelements und des zweiten Flanschelements hergestellt wird. So kann ein einfach und sicher montierbarer Roboterarm bereitgestellt werden.

Ein Ausführungsbeispiel der Erfindung wird anhand der nachfolgenden Figuren erläutert. Es zeigt:
- Figur 1: eine schematische Explosionsdarstellung eines Ausführungsbeispiels einer Flanschverbindung in einer Einbausituation,
- Figur 1a: eine schematische Perspektivansicht eines ersten Flanschelements des in Fig. 1 gezeigten Ausführungsbeispiels,
- Figur 1b: eine schematische Perspektivansicht eines zweiten Flanschelements des in Fig. 1 gezeigten Ausführungsbeispiels,
- Figur 2: eine schematische Seitenansicht der in Fig. 1 gezeigten Einbausituation,
- Figur 3: eine schematische Schnittansicht der in Fig. 1 gezeigten Einbausituation mit markiertem Detail A,
- Figur 4: eine vergrößerte schematische Darstellung des in Fig. 3 markierten Details A,
- Figur 5: eine perspektivische schematische Darstellung des in Fig. 1 gezeigten Ausführungsbeispiels in Alleinstellung.

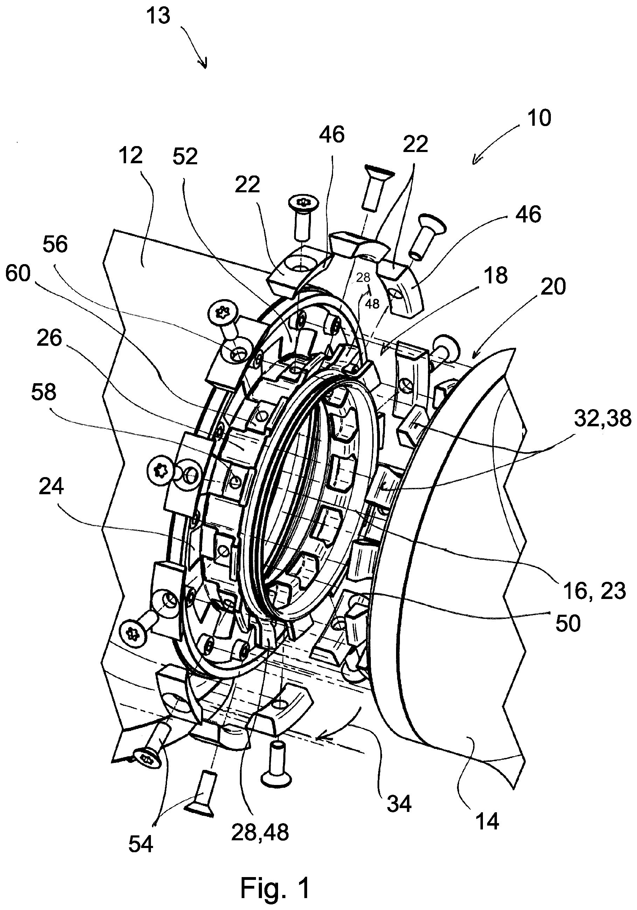

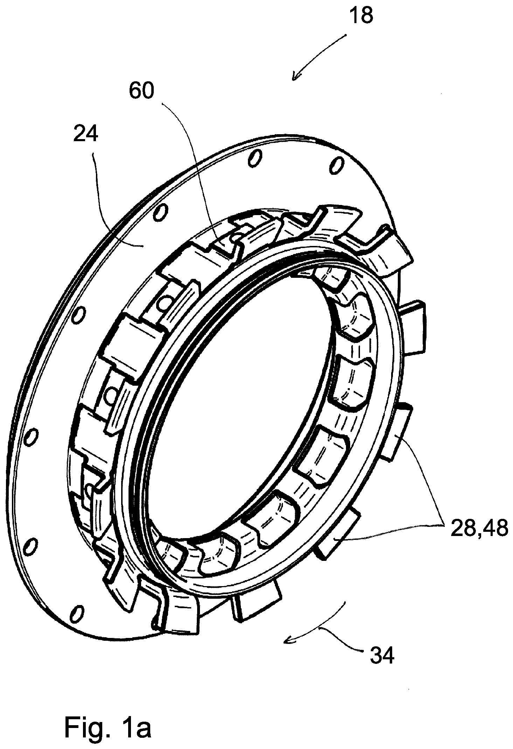

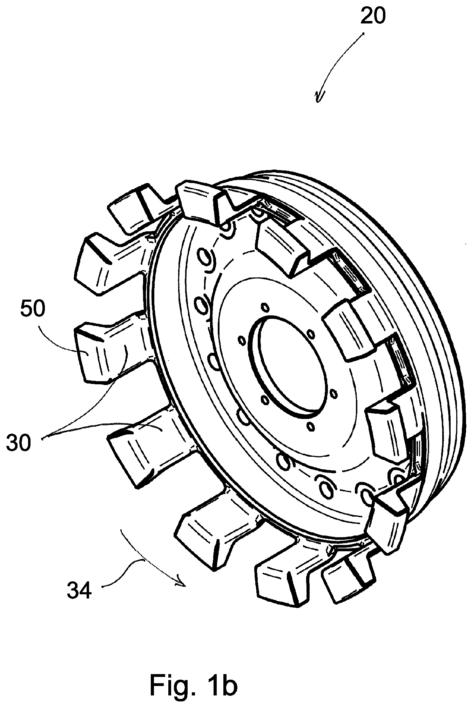

Die Figuren 1 bis 5 zeigen verschiedene Ansichten eines Ausführungsbeispiels. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt eine Explosionsdarstellung eines Ausführungsbeispiels einer Flanschverbindung 10 zur Verbindung eines ersten Roboterarmteils 12 eines Roboterarms 13 mit einem zweiten Roboterarmteil 14 des Roboterarms 13. Fig. 1 zeigt die Flanschverbindung 10 dabei in einer Einbausituation, sodass die der erste Roboterarmteil 12 und der zweiten Roboterarmteil 14 ebenfalls dargestellt sind.

Die Flanschverbindung 10 umfasst eine Flanschlängsachse 16, ein erstes Flanschelement 18 sowie ein zweites Flanschelement 20 und kann eine Vielzahl von Klemmkörpern 22 aufweisen. Die Flanschlängsachse 16 kann zusammenfallend mit einer Roboterarmlängsachse 23 des ersten Roboterarmteils 12 und des zweiten Roboterarmteils 14 ausgebildet sein.

Vorzugsweise ist das erste Flanschelement 18 an dem ersten Roboterarmteil 12 und das zweite Flanschelement 20 fest an dem zweiten Roboterarmteil 14 angeordnet. Bei der Montage des Roboterarms 13 können so das erste Flanschelement 18 an dem ersten Roboterarmteil 12 und das zweite Flanschelement 20 an dem zweiten Roboterarmteil 14 angeordnet werden, bevor die Verbindung der beiden Roboterarmteile 12, 14 durch Zusammenfügen des ersten Flanschelements 18 und des zweiten Flanschelements 20 hergestellt wird.

Wie Fig. 1 weiter zeigt, umfasst das erste Flanschelement 18 eine Flanschschulter 24 und einen in einer Richtung der Flanschlängsachse 16 hervorragenden ersten Flanschvorsprung 26, der eine Vielzahl von ersten Spannfortsätzen 28 aufweisen kann. Das zweite Flanschelement 20 umfasst vorzugsweise eine Vielzahl von zweiten Flanschvorsprüngen 30 mit jeweils einem zweiten Spannfortsatz 32. Vorzugsweise ragen die zweiten Flanschvorsprünge 30 in einer dem ersten Flanschvorsprung 26 entgegengesetzter Richtung entlang der Flanschlängsachse 16 von dem zweiten Flanschelement 20 hervor.

Entsprechend der Darstellung in Fig. 1 sind vorzugsweise die ersten Spannfortsätze 28 und die zweiten Flanschvorsprünge 30 in einer Umfangsrichtung 34 um die Flanschlängsachse 16 gleichmäßig und abwechselnd angeordnet, sodass sich eine Kronenform des ersten Flanschelements 18 und des zweiten Flanschelements 20 ergibt (siehe Fig. 1a u. 1b). Dadurch kann jeder zweite Flanschvorsprung 30 in der Umfangsrichtung 34 an einen der ersten Spannfortsätze 28 angrenzen. Vorzugsweise sind zwölf erste Spannfortsätze 28, zwölf zweite Flanschvorsprünge 30 und zwölf Klemmkörper 22 vorhanden.

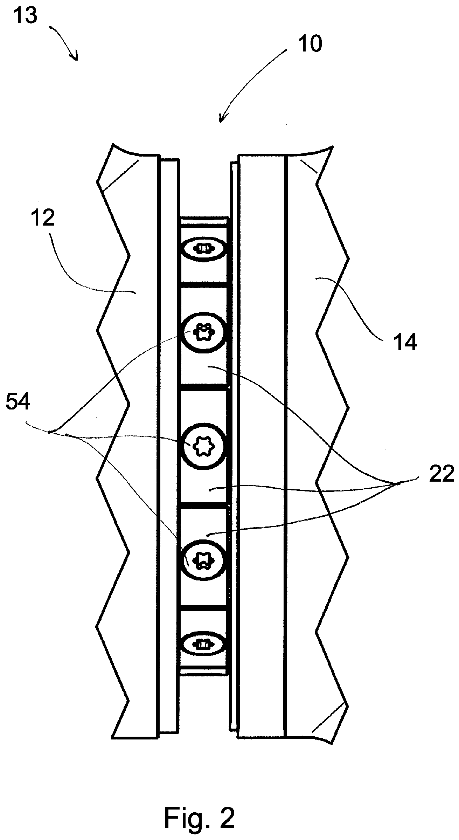

Fig. 2 zeigt eine Seitenansicht der in Fig. 1 dargestellten Anordnung. Dabei wird deutlich, dass die Flanschverbindung 10 entlang der Flanschlängsachse 16 einen sehr geringen axialen Bauraumbedarf aufweist.

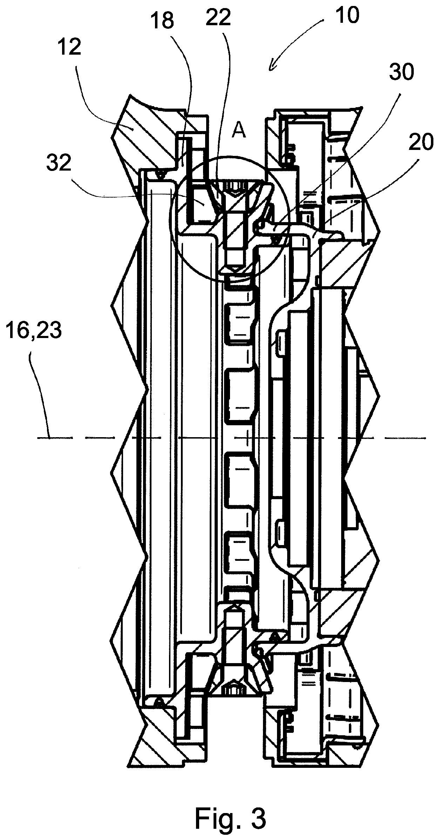

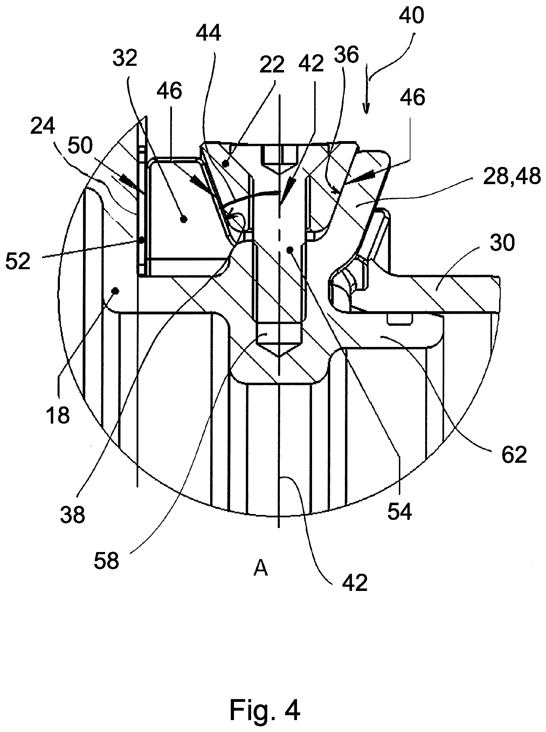

Ein Längsschnitt durch die in Fig. 2 dargestellte Anordnung entlang der Flanschlängsachse 16 zeigt Fig. 3. Hervorgehoben ist dabei das Detail A, dass in Fig. 4 vergrößert dargestellt ist, und anhand dessen die Funktionsweise der Flanschverbindung 10 weiter verständlich wird.

Die Zusammenschau der Fig. 3 u. 4 zeigt, dass das erste Flanschelement 18 und das zweite Flanschelement 20 derart zueinander angeordnet sind, dass, bezogen auf die Flanschlängsachse 16, der hinter der Schnittebene liegende zweite Spannfortsatz 32 zwischen der Flanschschulter 24 und dem in der Schnittebenen liegenden ersten Spannfortsatz 28 angeordnet ist. Durch Einschieben einer der Klemmkörper 22 zwischen dem ersten Spannfortsatz 28 und dem zweiten Spannfortsatz 32 ist eine reibschlüssige Verbindung des zweiten Spannfortsatzes 32 mit der Flanschschulter 24 herstellbar. Vorzugsweise ist der Klemmkörper 22 senkrecht zu der Flanschlängsachse 16 einschiebbar angeordnet.

Fig. 4 zeigt deutlich, dass die Klemmkörper 22 keilförmig ausgebildet sind und einen trapezförmigen Querschnitt aufweisen. Dadurch kann die Flanschverbindung 10 über die Einschubtiefe der Klemmkörper 22 zwischen dem jeweiligen ersten Spannfortsatz 28 und den jeweiligen zweiten Spannfortsätzen 32 bestimmt werden.

Jeder der ersten Spannfortsätze 28 kann eine erste Spannfläche 36 zum Zusammenwirken mit einem der Klemmkörper 22 und jeder der zweiten Spannfortsätze 32 kann eine zweite Spannfläche 38 zum Zusammenwirken mit einem der Klemmkörper 22 aufweisen. Die erste Spannfläche 36 und die zweite Spannfläche 38 schließen vorzugsweise mit einer in einer in Fig. 4 eingezeichneten Einschieberichtung 40 des jeweiligen Klemmkörpers 22 angeordneten Einschiebeachse 42 einen Klemmwinkel 44 zwischen 10° und 30° ein. Insbesondere wenn die Klemmkörper 22 keilförmig ausgebildet sind, sind an der ersten Spannfläche 36 bzw. der zweiten Spannfläche 38 anliegende Klemmflächen 46 der Klemmkörper 22 vorzugsweise parallel zu der jeweils entsprechenden Spannfläche 36, 38 ausgebildet. Wie insbesondere Fig. 4 aber auch Fig. 1 zeigt, sind die ersten Spannfortsätze 28 vorzugsweise als Federzungen 48 ausgebildet.

Wie ebenfalls aus den Fig. 1 u. 4 ersichtlich ist, weist jeder der der zweiten Spannfortsätze 32 eine parallel zu der Flanschschulter 24 angeordnete Schulterkontaktfläche 50 zum Herstellen der reibschlüssigen Verbindung mit der Flanschschulter 24 auf. Bevorzugt ist die Schulterkontaktfläche 50 der zweiten Spannfläche 38 gegenüberliegend angeordnet. Die Schulterkontaktfläche 50 ist vorzugsweise senkrecht zu der Flanschlängsachse 16 angeordnet, sodass die zweiten Spannfortsätze 32 damit jeweils einen trapezförmigen Querschnitt aufweisen können.

Die Flanschverbindung 10 kann eine Reibplatte 52 aufweisen, die insbesondere in den Fig. 1 u. 4 erkennbar ist. Die Reibplatte 52 ist vorzugsweise zwischen der Flanschschulter 24 und den zweiten Spannfortsätzen 32 angeordnet, und kann dort der Verbesserung des Reibschlusses dienen. Besonders bevorzugt ist die Reibplatte zwischen der Flanschschulter 24 und der jeweiligen Schulterkontaktfläche 50 angeordnet.

Jeder Klemmkörper 22 ist vorzugsweise mittels jeweils einer Klemmschraube 54 zwischen dem jeweiligen ersten Spannfortsatz 28 und den jeweiligen zweiten Spannfortsätzen 32 einschiebbar. Dadurch kann die die Klemmkraft mittels der Anzugsmomente der Klemmschraube 54 eingestellt werden. Die Klemmkörper 22 können Durchgangsbohrungen 56 aufweisen, in denen die Klemmschrauben 54 vorzugsweise angeordnet sind.

Wie Fig. 4 zeigt, kann der erste Flanschvorsprung 26 für jeden der Klemmkörper 22 eine Gewindebohrung 58 aufweisen, in die die jeweilige Klemmschraube 54 einschraubbar ist. Der erste Flanschvorsprung 26 kann angrenzend an jeden der ersten Spannfortsätze 28 jeweils einen, vorzugsweise entgegen der Einschieberichtung 40, hervorstehenden Gewindesockel 60 aufweisen.

Fig. 4 zeigt ferner, dass das erste Flanschelement 18 einstückig ausgebildet sein kann. Das erste Flanschelement 18 kann einen Dichtvorsprung 62 aufweisen, der mit dem zweiten Flanschelement 20 zur Abdichtung der Flanschverbindung 10 gegenüber der Umgebung zusammenwirken kann.

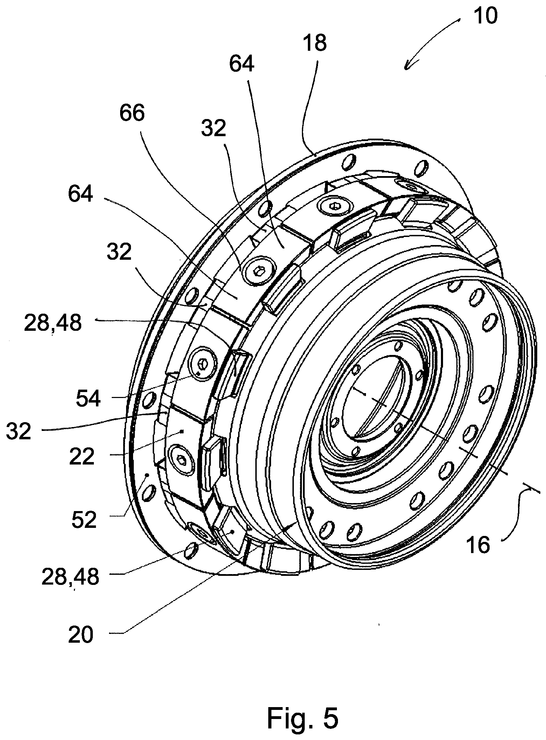

Fig. 5 zeigt eine Darstellung der Flanschverbindung 10 in Alleinstellung, also ohne angeschlossene Roboterarmteile 12, 14. Diese Ansicht zeigt, dass jeder der Klemmkörper 22 zwei einander gegenüberliegende Endabschnitte 64 und einen zwischen den Endabschnitten 64 angeordneten Mittelabschnitt 66 aufweisen kann. Vorzugsweise ist jeder der Klemmkörper 22 derart angeordnet, dass an jedem der beiden Endabschnitte 64 des jeweiligen Klemmkörpers 22 jeweils einer der zweiten Flanschvorsprünge 30 und an dem Mittelabschnitt 66 des jeweiligen Klemmkörpers 22 einer der ersten Spannfortsätze 28 angeordnet ist. Vorzugsweise sind die zweiten Flanschvorsprünge 30 jeweils mit dem jeweiligen zweiten Spannfortsatz 32 an dem jeweiligen Klemmkörper 22 angeordnet.

### Bezugszeichenliste

- 10: Flanschverbindung
- 12: erster Roboterarmteil
- 13: Roboterarm
- 14: zweiter Roboterarmteil
- 16: Flanschlängsachse
- 18: erstes Flanschelement
- 20: zweites Flanschelement
- 22: Klemmkörper
- 23: Roboterarmlängsachse
- 24: Flanschschulter
- 26: erster Flanschvorsprung
- 28: erster Spannfortsatz
- 30: zweiter Flanschvorsprung
- 32: zweiter Spannfortsatz
- 34: Umfangsrichtung
- 36: erste Spannfläche
- 38: zweite Spannfläche
- 40: Einschieberichtung
- 42: Einschiebeachse
- 44: Klemmwinkel
- 46: Klemmfläche
- 48: Federzunge
- 50: Schulterkontaktfläche
- 52: Reibplatte
- 54: Klemmschraube
- 56: Durchgangsbohrung
- 58: Gewindebohrung
- 60: Gewindesockel
- 62: Dichtvorsprung
- 64: Endabschnitt
- 66: Mittelabschnitt

## Patentansprüche

1. Flanschverbindung (10) zur Verbindung eines ersten Roboterarmteils (12) mit einem zweiten Roboterarmteil (14), mit einer Flanschlängsachse (16), einem ersten Flanschelement (18), einem zweiten Flanschelement (20) und mindestens einem Klemmkörper (22),
wobei das erste Flanschelement (18) umfasst
• eine Flanschschulter (24), und
• einen in einer Richtung der Flanschlängsachse (16) hervorragenden ersten Flanschvorsprung (26) mit mindestens einem ersten Spannfortsatz (28),
wobei das zweite Flanschelement (20) umfasst
• mindestens einen in einer Richtung der Flanschlängsachse (16) hervorragenden zweiten Flanschvorsprung (30) mit einem zweiten Spannfortsatz (32),
und wobei das erste Flanschelement (18) und das zweite Flanschelement (20) derart zueinander angeordnet sind, dass, bezogen auf die Flanschlängsachse (16), der zweite Spannfortsatz (32) zwischen der Flanschschulter (24) und dem mindestens einen ersten Spannfortsatz (28) angeordnet ist, und dass durch Einschieben des mindestens einen Klemmkörpers (22) zwischen dem mindestens einen ersten Spannfortsatz (28) und dem zweiten Spannfortsatz (32) eine reib- und/oder formschlüssige Verbindung des zweiten Spannfortsatzes (32) mit der Flanschschulter (24) herstellbar ist.

2. Flanschverbindung nach Anspruch 1,
**dadurch gekennzeichnet, dass** der mindestens eine Klemmkörper (22) keilförmig ausgebil det ist.

3. Flanschverbindung nach einem der vorhergehenden Ansprüche, **dadurch gekennzeichnet, dass** der mindestens eine erste Spannfortsatz (28) eine erste Spannfläche (36) zum Zusammenwirken mit dem mindestens einen Klemmkörper (22) und der zweite Spannfortsatz (32) eine zweite Spannfläche (38) zum Zusammenwirken mit dem mindestens einen Klemmkörper (22) aufweist, wobei die erste Spannfläche (36) und/oder die zweite Spannfläche (38) mit einer in einer Einschieberichtung (40) des mindestens einen Klemmkörpers (22) angeordneten Einschiebeachse (42) einen Klemmwinkel (44) zwischen 0° und 90°, vorzugsweise zwischen 10° und 30°, einschließen.

4. Flanschverbindung nach einem der vorhergehenden Ansprüche, **dadurch gekennzeichnet, dass** der mindestens eine erste Spannfortsatz (28) als Federzunge (48) ausgebildet ist.

5. Flanschverbindung nach einem der vorhergehenden Ansprüche, **dadurch gekennzeichnet, dass** der zweite Spannfortsatz (32) eine parallel zu der Flanschschulter (24) angeordnete Schulterkontaktfläche (50) zum Herstellen der reib- und/oder formschlüssigen Verbindung mit der Flanschschulter (24) aufweist.

6. Flanschverbindung nach einem der vorhergehenden Ansprüche, **dadurch gekennzeichnet, dass** die Flanschverbindung (10) eine Reibplatte (52) aufweist, die zwischen der Flanschschulter (24) und dem zweiten Spannfortsatz (32) angeordnet ist.

7. Flanschverbindung nach einem der vorhergehenden Ansprüche, **dadurch gekennzeichnet, dass** die Flanschverbindung (10) mindestens eine Klemmschraube (54) umfasst, mittels der der mindestens eine Klemmkörper (22) zwischen dem mindestens einen ersten Spannfortsatz (28) und dem zweiten Spannfortsatz (32) einschiebbar ist.

8. Flanschverbindung nach Anspruch 7,
**dadurch gekennzeichnet, dass** der erste Flanschvorsprung (26) oder der zweite Flanschvorsprung (30) mindestens eine Gewindebohrung (58) aufweist, in die die mindestens eine Klemmschraube (54) einschraubbar ist.

9. Flanschverbindung nach einem der vorhergehenden Ansprüche, **dadurch gekennzeichnet, dass** der mindestens eine Klemmkörper (22) zwei einander gegenüberliegende Endabschnitte (64) und einen zwischen den Endabschnitten (64) angeordneten Mittelabschnitt (66) aufweist, wobei der mindestens eine Klemmkörper (22) derart angeordnet ist, dass
entweder an jedem der beiden Endabschnitte (64) jeweils einer des mindestens einen ersten Spannfortsatzes (28) und an dem Mittelabschnitt (66) einer des mindestens einen zweiten Flanschvorsprungs (30) angeordnet ist, oder an jedem der beiden Endabschnitte (64) jeweils einer des mindestens einen zweiten Flanschvorsprungs (30) und an dem Mittelabschnitt (66) einer des mindestens einen ersten Spannfortsatzes (28) angeordnet ist.

10. Flanschverbindung nach einem der vorhergehenden Ansprüche, **dadurch gekennzeichnet, dass** der mindestens eine erste Spannfortsatz (28) und der mindestens eine zweite Flanschvorsprung (30) in einer Umfangsrichtung (34) um die Flanschlängsachse (16) abwechselnd und/oder zueinander versetzt angeordnet sind.

11. Flanschverbindung nach einem der vorhergehenden Ansprüche, **dadurch gekennzeichnet, dass** die Anzahl des mindestens einen Klemmkörpers (22) der Anzahl des mindestens einen ersten Spannfortsatzes (28) und/oder der Anzahl des mindestens einen zweiten Flanschvorsprungs (30) entspricht.

12. Flanschverbindung nach einem der vorhergehenden Ansprüche, **dadurch gekennzeichnet, dass** das erste Flanschelement (18) eine Vielzahl von ersten Spannfortsätzen (28) und das zweite Flanschelement (20) eine Vielzahl von zweiten Flanschvorsprüngen (30) aufweist.

13. Flanschverbindung nach Anspruch 12,
**dadurch gekennzeichnet, dass** die ersten Spannfortsätze (28) und die zweiten Flanschvorsprünge (30) gleichmäßig verteilt um die Flanschlängsachse (16) angeordnet sind.

14. Roboterarm (13) mit einem ersten Roboterarmteil (12), einem zweiten Roboterarmteil (14) und einer Flanschverbindung (10) nach einem der vorhergehenden Ansprüche, wobei das erste Flanschelement (18) fest an dem ersten Roboterarmteil (12) und das zweite Flanschelement (20) fest an dem zweiten Roboterarmteil (14) angeordnet ist.
